**Europäisches Patentamt**

**European Patent Office**

**Office européen des brevets**

(19)

(11) Numéro de publication : **0 436 440 B1**

(12) **FASCICULE DE BREVET EUROPEEN**

(45) Date de publication du fascicule du brevet :
**10.11.93 Bulletin 93/45**

(51) Int. Cl.$^5$ : **A23B 4/20, A23B 4/12**

(21) Numéro de dépôt : **90403790.0**

(22) Date de dépôt : **27.12.90**

(54) **Composition utile pour la préparation de conserves de produits de la mer, procédé de préparation de ces conserves et conserves ainsi obtenues.**

(30) Priorité : **05.01.90 FR 9000102**

(43) Date de publication de la demande :
**10.07.91 Bulletin 91/28**

(45) Mention de la délivrance du brevet :
**10.11.93 Bulletin 93/45**

(84) Etats contractants désignés :
**BE DE DK ES GB GR IT NL SE**

(56) Documents cités :
**EP-A- 0 012 255**
**EP-A- 0 190 028**
**EP-A- 0 192 354**
**FR-A- 1 536 429**
**FR-A- 2 116 051**

(56) Documents cités :
**US-A- 3 745 027**
**US-A- 4 262 027**
**DERWENT FILE SUPPLIER WPI/L, 1985,
AN=85-206541[34], Derwent Publications Ltd,
Londres, GB; & JP-A-60 130 377**

(73) Titulaire : **Roquette Frères**
**F-62136 Lestrem (FR)**

(72) Inventeur : **Serpelloni, Michel**
**155 Rue Nationale**
**F-62660 Beuvry les Bethune (FR)**
Inventeur : **Dusautois, Cécile**
**5, Route Nationale**
**F-62215 Oye Plage (FR)**

(74) Mandataire : **Koch, Gustave et al**
**Cabinet PLASSERAUD 84, rue d'Amsterdam**
**F-75009 Paris (FR)**

## Description

La présente invention a pour objet une composition utile pour la préparation de conserves de produits de la mer. Elle a également pour objet un procédé de préparation de ces conserves et les conserves ainsi obtenues.

Par conserve, on entend au sens de l'invention tout conditionnement de produits alimentaires, en l'occurrence de produits de la mer, dans des emballages hermétiquement fermés et préparés par la mise en oeuvre d'un traitement de stérilisation à température élevée pendant une courte période, ledit traitement étant destiné à éliminer tous microorganismes, y compris les spores, aptes à se reproduire dans des conditions non réfrigérées de stockage et de distribution.

Les produits de la mer concernés par l'invention sont les fruits de mer tels que la moule, les crustacés tels que la crevette ou le crabe et plus généralement les poissons de toute nature.

L'industrie de la conserverie des produits de la mer et plus particulièrement des crustacés est soumise à des exigences très strictes.

En effet, le consommateur final exige du produit mis en conserve une texture, qu'il traduit en termes de fermeté sous la dent et au toucher, aussi proche que possible de celle du produit fraichement pêché. Il exige également que le produit présente une couleur naturelle, un goût non altéré et plus généralement un maintien de l'ensemble de ses qualités organoleptiques.

Or, ces exigences sont difficilement compatibles avec

- d'une part, le fait qu'entre le moment où les produits de la mer sont pêchés et celui où ils sont mis en conserve, il peut s'écouler une durée plus ou moins longue au cours de laquelle les produits peuvent subir diverses modifications indésirables et,
- d'autre part, le fait qu'une fois parvenus sur le lieu de mise en conserve, ils subissent des traitements susceptibles de conduire à des détériorations d'une ou plusieurs des qualités essentielles rappelées ci-dessus.

Ainsi, avant d'arriver à la conserverie, les produits de la mer peuvent subir des altérations de leur texture sous l'action d'enzymes endogènes et/ou de bactéries contaminantes, lesdites bactéries pouvant également générer une dénaturation des constituants de ces produits. Les crustacés, en particulier, sous l'action du temps, sont le siège de transformations chimiques indésirables qui se traduisent par des modifications de couleur, l'oxydation de certains composants de leur chair conduisant, par exemple, à un assombrissement de la couleur.

A la conserverie, le traitement de stérilisation à température élevée, s'il a pour effet d'éliminer les microorganismes contaminants éventuellement présents, entraine aussi parfois une perte de texture, en particulier de fermeté.

Toutes les recherches qui ont été menées pour améliorer la qualité des conserves de produits de la mer et satisfaire le consommateur ont donc été orientées essentiellement vers l'amélioration de la texture, de la couleur et du goût.

Pour améliorer la texture, il a surtout été proposé d'ajouter au produit du sel de cuisine et de laver ensuite à l'eau les produits chargés de sel de manière à éliminer une partie de ce sel; ce dernier reste néanmoins présent à des concentrations relativement élevées, d'où une saveur particulièrement désagréable et des incidences néfastes sur la santé. En effet, le sel est connu pour être un facteur favorisant l'hypertension du fait de la rétention de sodium. En outre, les lavages répétés entraînent des pertes d'arôme, préjudiciables aux qualités organoleptiques des produits finalement obtenus.

En ce qui concerne les changements de couleur indésirables, on a constaté qu'ils étaient surtout dus à des transformations chimiques des composants de la chair des produits de la mer.

Ces transformations chimiques sont notamment à l'origine de la formation de pigments bleus dans les produits concernés. Dans ce cas, les métalloenzymes, à savoir les tyrosinases et les phénoloxydases naturellement présentes dans la chair des crustacés, oxydent en présence de cuivre et de fer les groupements hydroxyles des phénols entrant eux aussi dans la constitution de la chair. Une fois oxydés, ces derniers se condensent pour donner des composés de haut poids moléculaire, les mélamines, dont la couleur varie du bleu au noir suivant le degré d'oxydation du milieu.

D'autre part, les composants protéiniques des produits de la mer contiennent des éléments soufrés qui, lors de la stérilisation, se transforment en hydrogène sulfuré qui réagit avec les ions ferreux provenant du métal constitutif des boîtes de conserve pour donner du sulfure de fer de couleur noire.

On a déjà proposé des solutions pour empêcher la formation de ces colorations. Par exemple, pour empêcher la formation du sulfure de fer, il est connu d'utiliser des boîtes de conserve vernies intérieurement, ou d'insérer entre la chair et les parois de la boîte un papier parchemin, éventuellement imbibé d'une solution de sel de zinc. Outre le fait que ces dispositions augmentent le prix de revient des conserves, elles n'ont pas donné de résultats réellement satisfaisants.

D'une manière plus générale, pour éviter la formation aussi bien des mélamines que du sulfure de fer, il a été proposé d'ajouter un acide alimentaire, par exemple l'acide citrique et/ou l'acide acétique, aux produits de la mer, afin d'une part de diminuer le pH jusqu'à des valeurs acides et d'autre part de complexer les ions métalliques $Fe^{++}$, $Cu^{++}$, $Mg^{++}$, intervenant dans les transformations chimiques conduisant à la formation des composés colorés; les acides en question sont généralement associés à du sel utile à la préservation de la texture des produits.

L'addition de ces acides n'a pas donné entière satisfaction. En effet, les produits résultants ont un goût acide très prononcé tout à fait désagréable qui s'ajoute à celui du sel en excès; les qualités organoleptiques des produits sont dégradées sans que soient diminuées de façon significative les teneurs en composés colorés.

Les transformations chimiques que subissent les chairs des produits de la mer peuvent également conduire à la formation de cristaux de struvite ou phosphate d'ammonium et de magnésium ($MgNH_4PO_4$, $6H_2O$); ces cristaux résultent d'une association, pendant la fabrication des conserves, entre les groupements $PO_4^{3-}$ et le magnésium présents dans la chair et les groupements $NH_4^+$ issus de la dégradation des protéines. La cristallisation survient pendant le refroidissement et se poursuit pendant le stockage.

Ces cristaux, bien que non toxiques, restent cependant tout à fait indésirables, à cause de la sensation désagréable qu'ils provoquent lors de la consommation du produit.

Pour éviter la formation des cristaux, on a proposé le même type de solution que celle proposée pour éviter les colorations.

D'autres compositions ont également été proposées pour stabiliser les qualités de texture, de couleur et de goût des produits de la mer mis en conserve: elles comportent différents types de séquestrants dont le rôle est de bloquer les ions métalliques impliqués dans les réactions de formation de colorations et de cristaux de struvite.

C'est ainsi qu'on a proposé des compositions additives à base de phosphates et de citrates (demande de brevet japonais JP no. 51-41465), ou à base de phosphates et d'acide éthylènediamine tétraacétique ou EDTA ("Hand-book of Food Additives", 2ème édition, 1972, pages 737-738). Les produits de la mer en conserve traités à l'aide de ces compositions restent relativement instables à la conservation. Ils s'oxydent et présentent toujours des colorations foncées. De plus, les cristaux de struvite ne sont pas entièrement éliminés; enfin, les propriétés organoleptiques des produits résultants pourraient encore être améliorées.

En outre, tant l'EDTA que les phosphates ne sont pas considérés comme sûrs sur le plan médical et écologique.

D'autres solutions ont donc été proposées pour s'affranchir de ce type de produits.

Ainsi, la demande de brevet européen EP-A-0 190 028 propose d'utiliser la gluconodeltalactone ou GDL à titre d'additif dans des conserves de produits de la mer.

La GDL permet d'obtenir de relativement bons résultats quant à la saveur du produit frais par rapport à celle obtenue lorsque la conserve est additionnée de sel et d'acide citrique. En revanche, les résultats obtenus sur le plan de la texture du produit et des phénomènes de coloration et de formation de cristaux de struvite, contrairement à ce qui est indiqué dans ladite demande de brevet, ne sont pas entièrement satisfaisants.

Par ailleurs et dans des domaines différents,
- le brevet US-A-3 745 027 propose l'utilisation d'alcools polyhydriques et d'agents antimycotiques tels que les acides sorbique, propionique et benzoïque dans des procédés de déshydratation de produits alimentaires à base de viandes, légumes ou fruits,
- le brevet JP 60-130377 (abstract Derwent 8534) décrit l'utilisation d'agents d'assaisonnement choisis parmi le glutamate de sodium, le sorbitol, l'acide phosphorique et la gluconodeltalactone pour la préparation d'oeufs de morue destinés à être conditionnés sous film d'emballage plastique,
- la demande de brevet EP-A-0 012 255 décrit l'utilisation d'agents humectants tels que des polyols, d'acides de qualité alimentaire tels que l'acide citrique et d'agents acidulants tels que la gluconodeltalactone ou le pyrophosphate acide de sodium pour des produits alimentaires à humidité intermédiaire soumis à un traitement doux de pasteurisation.

Par conséquent, l'invention a pour but, surtout, de remédier aux inconvénients de l'art antérieur en proposant une composition propre à la préparation de conserves de produits de la mer et conférant à ces produits, une fois mis en conserve, des propriétés améliorées tant sur le plan de la texture que sur celui de la coloration.

Or, au terme de ses travaux, la Demanderesse a eu le mérite de constater que ce but était atteint dès lors qu'on a recours, pour préparer des conserves de produits de la mer, à une composition qui comprend une quantité efficace d'une part, d'au moins un agent acidogène et/ou d'au moins l'un de ses dérivés et, d'autre part, d'au moins un sucre-alcool.

Il s'ensuit que la composition conforme à l'invention, propre à la préparation des conserves de produits de la mer, est caractérisée en ce qu'elle comprend au moins un agent acidogène et/ou au moins l'un de ses dérivés ainsi qu'au moins un sucre-alcool.

On désigne par "agent acidogène" toute substance neutre du point de vue du pH et capable, après solubilisation en milieu aqueux, de s'hydrolyser progressivement en acide. Cette substance est choisie dans le groupe comprenant les gluconolactones, les glucoheptonolactones et leurs équivalents et/ou leurs mélanges, de préférence les gluconolactones et, plus préférentiellement encore, la gluconodeltalactone ou GDL.

Parmi les dérivés de l'agent acidogène applicables à la composition conforme à l'invention, on peut citer les sels tels que les gluconates et les gluconoheptonates.

On désigne par sucre-alcool tout dérivé hydrogéné de composés saccharidiques, notamment le sorbitol, le mannitol, le xylitol; on utilisera de préférence le sorbitol.

Dans un mode de réalisation avantageux de la composition conforme à l'invention, celle-ci comprend de 1 à 75% en poids d'agent acidogène et de 25 à 99% en poids de sucre-alcool; de préférence, la composition comprend de 6,5 à 33% en poids de GDL et de 67 à 93,5% en poids de sorbitol.

Suivant un autre mode de réalisation avantageux de la composition selon l'invention, celle-ci comprend de la GDL et du sorbitol.

On constate, en effet, que la combinaison GDL-sorbitol est particulièrement efficace. On suppose, sans toutefois vouloir être liés par cette hypothèse, que ces résultats sont obtenus grâce a l'effet favorisant du sorbitol sur le pouvoir séquestrant connu de la GDL.

Par ailleurs, le sorbitol a une incidence sur le plan osmotique et permet probablement un déplacement de l'équilibre en eau dans la conserve en faveur du jus d'emboîtage contenant la composition conforme à l'invention. De ce fait, la tendance des produits à absorber ce jus est limitée, ce qui est tout à fait favorable du point de vue de la fermeté.

Par ailleurs, le sorbitol ne possède qu'un pouvoir sucrant de 0,7, c'est-à-dire égal à 0,7 fois celui du saccharose. Il est donc possible de faire comporter, à la composition, du sorbitol dans des quantités relativement importantes sans qu'il puisse être décelé une modification de la saveur sucrée dans les produits.

Traditionnellement, pour préparer des conserves de produits de la mer, on procède de la façon suivante :
- on extrait la chair d'un produit de la mer qu'on souhaite mettre en conserve,
- on soumet ladite chair à un traitement de blanchiment qui consiste à la mettre en contact avec un jus de blanchiment à une température élevée, pendant un temps suffisant pour la stabiliser, puis à l'égoutter et à la laver à l'eau,
- on la met en boîte avec un jus d'emboîtage puis on ferme hermétiquement ladite boîte,
- on soumet la boîte ainsi fermée à un traitement de stérilisation.

Or, la Société Demanderesse a trouvé que la susdite composition conforme à l'invention pouvait également être mise en oeuvre au moment du traitement de blanchiment.

Le procédé conforme à l'invention est donc caractérisé en ce que l'on a recours à une quantité efficace de la composition conforme à l'invention au moment de l'étape de mise en boîte.

Par quantité efficace, on désigne la quantité en deçà de laquelle on ne parviendrait pas à éliminer les inconvénients de l'art antérieur, notamment en ce qui concerne la fermeté des produits.

Avantageusement, la composition conforme à l'invention peut également être utilisée comme composante du jus de blanchiment.

Suivant un mode de réalisation avantageux du procédé conforme à l'invention, on a recours à une composition conforme à l'invention tant pour l'étape du blanchiment que pour l'étape de la mise en boîte.

Suivant un autre mode de réalisation avantageux du procédé conforme à l'invention, on ajuste le pH du jus d'emboîtage à une valeur comprise entre environ 6 et 7, de préférence entre environ 6 et 6,5, soit au moyen de la composition conforme à l'invention dans le cas où celle-ci contient un agent acidogène, soit au moyen d'un acide alimentaire au cas où ladite composition comprend un dérivé d'agent acidogène.

L'acide alimentaire peut être choisi dans le groupe comprenant les acides citrique, acétique, chlorhydrique, tartrique, lactique.

Lorsqu'elle est utilisée dans un jus de blanchiment, la composition conforme à l'invention est mise en oeuvre, par rapport au poids total du jus de blanchiment, en une quantité telle que ledit jus de blanchiment comporte de 0,2 à 3% en poids, de préférence de 0,7 à 1,5% en poids, d'agent acidogène, notamment de GDL et de 1 à 15% en poids, de préférence de 3 à 10% en poids, de sucre-alcool, notamment de sorbitol.

Le jus de blanchiment peut également contenir du sel, notamment du chlorure de sodium, et un antioxydant, par exemple le métabisulfite de sodium. Dans ce cas, la teneur en sel du jus de blanchiment est de préférence inférieure à 3% en poids, et la concentration en antioxydant est comprise, en général, entre 0,1 et 0,2% en poids.

Pour réaliser l'étape de blanchiment par mise en oeuvre de la composition conforme à l'invention, on immerge la chair du produit de la mer dans le jus de blanchiment comportant ladite composition, puis on amène l'ensemble à une température de l'ordre de 100°C pendant une durée de 10 à 15 minutes et plus préférentiellement d'environ 12 minutes, et on lave la chair blanchie à l'eau.

De façon surprenante, on a constaté que le jus de blanchiment comportant la composition conforme à l'invention est particulièrement peu agressif à l'égard des chairs des produits de la mer: il conserve leur couleur, leur texture, notamment leur fermeté au toucher et n'amène aucune toxicité.

Lorsqu'elle est utilisée dans un jus d'emboîtage, la composition conforme à l'invention est mise en oeuvre en une quantité telle que le jus d'emboîtage comporte de 0,2 à 2% en poids, de préférence de 0,7 à 1,1% en poids, d'agent acidogène, notamment de GDL et de 1 à 12% en poids, de préférence de 4 à 10% en poids de sucre-alcool, notamment de sorbitol.

Le jus d'emboîtage peut également contenir du sel, notamment du chlorure de sodium, représentant de 1 à 4% en poids du poids total du jus d'emboîtage, de préférence de l'ordre de 2,5%. A cette concentration, le sel n'a aucune incidence néfaste sur les produits finalement obtenus du point de vue organoleptique.

Bien entendu, les doses de GDL et de sorbitol employées tant dans le jus d'emboîtage que dans le jus de blanchiment peuvent varier en fonction de la nature des produits à l'intérieur des intervalles de concentrations indiqués ci-avant.

Cet ajustement est une opération routinière pour les spécialistes des conserves de produits de la mer.

Le traitement de stérilisation auquel sont soumises les chairs blanchies puis mises en boîtes, est connu en lui-même (voir par exemple l'ouvrage "L'industrie alimentaire halieutique" par Marcel SAINCLIVIER ISSN 03708411 - 1988). En tout état de cause, les barêmes de stérilisation varient en fonction de la nature et des dimensions du produit de la mer considéré et de la taille des boîtes.

A titre d'exemple, le "barême" de stérilisation dans des conteneurs cylindriques 86 x 44,5 mm est, pour les crabes, de 30 à 50 minutes, de préférence de l'ordre de 40 minutes à une température comprise entre 100 et 130°C, de préférence de l'ordre de 115°C, tandis que pour les crevettes, il est de 15 à 35 minutes, de préférence de l'ordre de 25 minutes à une température comprise entre 100 et 130°C, de préférence de l'ordre de 115°C.

L'invention a également pour objet les conserves de produits de la mer constituées par des conteneurs hermétiquement clos et stérilisés et caractérisées en ce que le jus d'emboîtage comprend une quantité efficace de la composition conforme à l'invention.

L'invention sera mieux comprise à l'aide de la description indiquée ci-après d'un mode de réalisation avantageux de l'invention et d'exemples comparatifs, pour la mise en conserve de crevettes, illustrée par le dessin dans lequel:

- la figure 1 est un graphique représentant la variation de la luminance exprimée en % en fonction du temps T exprimé en semaines à 40°C,
- la figure 2 est un graphique représentant la variation de la fermeté F exprimée en Newtons en fonction du temps T exprimé en semaines à 40°C.

Dans tous les exemples de mise en conserve de crevettes indiqués ci-après, les crevettes sont préparées selon la méthode traditionnelle qui comprend les étapes de lavage, décorticage et tri.

Puis, les crevettes sont blanchies. Pour cette opération, elles sont mises dans le jus de blanchiment, dans un rapport de 80 en poids de crevettes pour 100 en volume de jus de blanchiment.

Le blanchiment se fait à 100°C pendant 12 minutes.

Après avoir été égouttées, les crevettes sont lavées trois fois à l'eau froide.

Elles sont ensuite mises en boîtes, recouvertes du jus d'emboîtage et stérilisées à 115°C pendant 25 minutes.

Afin d'étudier le comportement des crevettes au cours du stockage, les conserves ont été étuvées à 40°C. Ainsi, les vitesse des réactions d'oxydation sont augmentées (vitesse multipliée par deux quand la température est augmentée de 10°C : loi d'Arrhénius du premier ordre). Ainsi, une semaine à 40°C correspond à peu près à 4 semaines à 20°C.

On a ensuite déterminé la fermeté et la coloration des crevettes ainsi préparées et stockées pendant 8 semaines à 40°C en utilisant les méthodes suivantes de détermination :

a) - Méthode de détermination de la luminance

La luminance est évaluée à l'aide d'un chromomètre par exemple celui commercialisé sous la dénomination CR-200 par Minolta. Une lampe illumine l'échantillon et seule la lumière réfléchie perpendiculairement à la surface est récupérée par la fibre optique pour l'analyse de la luminance.

La luminance permet d'apprécier le degré de coloration du produit puisque l'oxydation de la chair de poisson se traduit par une couleur sombre. Plus "L" est bas, plus le produit est oxydé. Inversement, plus "L" est élevé, moins le produit est oxydé, donc meilleure est la qualité de l'échantillon.

Afin d'avoir un échantillon uniforme, on le broie très finement. Une boîte de Petri est correctement remplie de ce broyat. Les mesures sont faites en différents points de la boîte. Deux échantillons sont préparés par essai. La valeur donnée correspond à la moyenne de dix mesures.

b) - Méthode de détermination de la fermeté

La fermeté des crevettes a été évaluée à l'aide d'un appareil INSTRON 4500, équipé d'une cellule de 100 N et d'un poinçon rectangulaire (19 x 40 mm). Le test a été effectué en déformation imposée, avec une vitesse de compression de 10 mm/min.

Les résultats sont exprimés en Newtons (expression de la moyenne de 5 mesures).

Les crevettes mesurées sont sélectionnées de manière à avoir des crevettes approximativement de même taille (épaisseur: 6 à 7 mm ; poids: 0,32 à 0,38 g). Ainsi, les différences observées sur les mesures ne sont pas dues à l'échantillon, mais bien au traitement auquel a été soumis cet échantillon pour sa préparation.

EXEMPLE

Préparation de conserves de crevettes avec différents jus de blanchiment et d'emboîtage.

Les compositions des jus sont indiquées dans le tableau I ci-après.

Les formulations 1 et 3 correspondent aux formulations de l'art antérieur, la formulation 2 étant conforme à l'invention.

Les quantités indiquées sont des pourcentages en poids par rapport au poids total des jus.

## TABLEAU I

| | Composants | Formulation 1 | Formulation 2 | Formulation 3 |
|---|---|---|---|---|
| Jus | GDL | 0 | 0,4 | 0,6 |
| | EDTA | 0,02 | 0 | 0 |
| de | Phosphates | 0,1 | 0 | 0 |
| | Acide citrique | 0,08 | 0 | 0 |
| blanchi- | Métabisulfite de Na | 0,16 | 0,16 | 0,16 |
| | Sel | 1 | 1 | 1 |
| ment | Sorbitol | 0 | 4 | 0 |
| | Eau | qsp 100 | qsp 100 | qsp 100 |
| | GDL | 0 | 0,4 | 0,6 |
| Jus | EDTA | 0,02 | 0 | 0 |
| | Phosphates | 0,4 | 0 | 0 |
| d'emboî- | Acide citrique | 0,1 | 0 | 0 |
| | Sel | 2,5 | 2,5 | 2,5 |
| tage | Sucre | 2,2 | 0 | 0 |
| | Sorbitol | 0 | 7 | 0 |
| | Eau | qsp 100 | qsp 100 | qsp 100 |

Comme indiqué précédemment, les conserves sont stockées pendant 8 semaines à 40°C, puis on évalue leur fermeté et leur luminance comme indiqué ci-dessus.

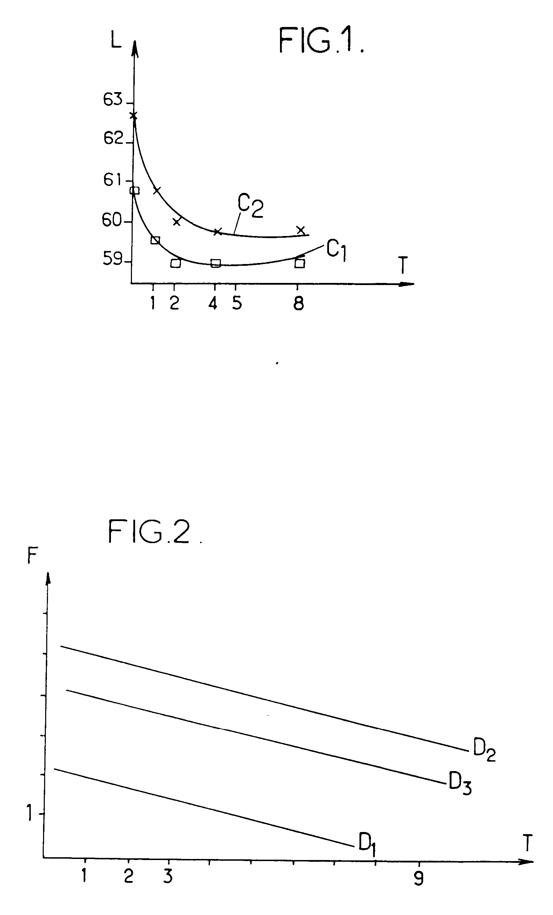

Les résultats des mesures de variation de la luminance apparaissent à la figure 1 et sont représentés par deux courbes $C_1$ et $C_2$ correspondant respectivement aux produits 1 et 2.

On constate que la luminance L est plus élevée pour les crevettes préparées en utilisant la formulation 2 conforme à l'invention. Les phénomènes d'oxydation sont donc moins prononcés que dans le cas de la formulation 1.

En employant dans les jus utilisés pour la préparation de conserves de produits de la mer, une composition selon l'invention, on obtient une stabilisation de la luminance supérieure à celle constatée avec une formulation suivant l'art antérieur.

Les résultats de fermeté sont illustrés par la figure 2 qui montre trois droites, respectivement $D_1$, $D_2$ et $D_3$, représentant la variation de la fermeté des produits 1, 2 et 3 en fonction du temps.

On constate que, par l'utilisation de la formulation 2 conforme à l'invention, la fermeté des crevettes est améliorée par rapport aux formulations selon l'art antérieur 1 et 3.

**Revendications**

1. Composition utile pour la préparation de conserves de produits de la mer, caractérisée en ce qu'elle comprend de 1 à 75% en poids d'au moins un agent acidogène choisi dans le groupe comprenant les gluconolactones, les glucoheptonolactones et leurs équivalents et/ou leurs mélanges, notamment les gluconolactones, et/ou au moins l'un des dérivés dudit agent acidogène ainsi que de 25 à 99% en poids d'au moins un sucre-alcool choisi parmi les dérivés hydrogénés de composés saccharidiques et notamment dans le groupe comprenant le sorbitol, le mannitol, le xylitol.

2. Composition selon la revendication 1, caractérisée en ce qu'elle comprend de 6,5 à 33% en poids de gluconodeltalactone et de 67 à 93,5% de sorbitol.

3. Procédé de préparation de conserves de produits de la mer dans lequel:
   - on extrait la chair d'un produit de la mer qu'on souhaite mettre en conserve,
   - on soumet ladite chair à un traitement ou étape de blanchiment qui consiste à la mettre en contact avec un jus de blanchiment à une température élevée, pendant un temps suffisant pour la stabiliser, puis à l'égoutter et à la laver à l'eau,
   - on met ladite chair en boîte avec un jus d'emboîtage au cours d'une étape de mise en boîte, puis on ferme hermétiquement ladite boîte,
   - on soumet la boîte ainsi fermée à un traitement de stérilisation à une température comprise entre 100 et 130°C,
   caractérisé en ce que l'on a recours à une quantité efficace d'une composition selon l'une des revendications 1 et 2 au moment de l'étape de mise en boîte.

4. Procédé de préparation de conserves de produits de la mer dans lequel:
   - on extrait la chair d'un produit de la mer qu'on souhaite mettre en conserve,
   - on soumet ladite chair à un traitement ou étape de blanchiment qui consiste à la mettre en contact avec un jus de blanchiment à une température élevée, pendant un temps suffisant pour la stabiliser, puis à l'égoutter et à la laver à l'eau,
   - on met ladite chair en boîte avec un jus d'emboîtage au cours d'une étape de mise en boîte, puis on ferme hermétiquement ladite boîte,
   - on soumet la boîte ainsi fermée à un traitement de stérilisation à une température comprise entre 100 et 130°C,
   caractérisé en ce que l'on a recours à une quantité efficace de la composition selon l'une des revendications 1 et 2 au moment de l'étape de blanchiment.

5. Procédé selon la revendication 3, caractérisé en ce que, pour la mise en oeuvre de l'étape de mise en boîte, l'on a recours à une quantité telle de la composition selon l'une des revendications 1 et 2, que le jus d'emboîtage comprend de 0,2 à 2% en poids, de préférence de 0,7 à 1,1% en poids, d'agent acidogène, notamment de gluconodeltalactone et de 1 à 12%, de préférence de 4 à 10% en poids, de sucre-alcool, notamment de sorbitol.

6.  Procédé selon la revendication 4, caractérisé en ce que, pour la mise en oeuvre de l'étape de blanchiment, l'on a recours à une quantité telle de la composition selon l'une des revendications 1 et 2, que le jus de blanchiment comprend de 0,2 à 3% en poids, de préférence de 0,7 à 1,5% en poids, d'agent acidogène, notamment de gluconodeltalactone et de 1 à 15%, de préférence de 3 à 10% en poids, de sucre-alcool, notamment de sorbitol.

7.  Procédé selon l'une des revendications 3 à 6, caractérisé en ce que l'on ajuste le pH du jus d'emboîtage à une valeur comprise entre 6 et 7, de préférence entre 6 et 6,5, soit au moyen de la composition conforme à l'invention dans le cas où celle-ci contient un agent acidogène, soit au moyen d'un acide alimentaire au cas où ladite composition comprend un dérivé d'agent acidogène.

## Patentansprüche

1.  Zur Herstellung von Konserven von Meeresprodukten geeignete Zusammensetzung, **dadurch gekennzeichnet,** daß sie 1 bis 75 Gew.-% mindestens eines säurebildenden Mittels, ausgewählt aus der Gruppe, umfassend die Gluconolactone, die Gluconoheptonolactone und ihre Äquivalente und/oder ihre Gemische, insbesondere die Gluconolactone, und/oder mindestens eines der Derivate des säurebildenden Mittels, sowie 25 bis 99 Gew.-% mindestens eines Zuckeralkohols, ausgewählt aus den hydrierten Derivaten von Saccharidverbindungen, und insbesondere aus der Gruppe, umfassend Sorbit, Mannit, Xylit, enthält.

2.  Zusammensetzung nach Anspruch 1, **dadurch gekennzeichnet,** daß sie 6,5 bis 33 Gew.-% Glucono-$\delta$-lacton und 67 bis 93,5 % Sorbit enthält.

3.  Verfahren zur Herstellung von Konserven von Meeresprodukten, wobei man
    - das Fleisch eines Meeresproduktes, das einkonserviert werden soll, gewinnt,
    - das Fleisch einer Blanchierbehandlung oder -stufe unterwirft, die aus dem Inkontaktbringen mit einer Blanchierflüssigkeit bei einer erhöhten Temperatur für eine zur Stabilisierung ausreichende Zeit, anschließendem Abtropfenlassen und Waschen mit Wasser besteht;
    - das Fleisch mit einer Flüssigkeit zum Eindosen während einer Stufe des Eindosens eindost, anschließend die Dose hermetisch schließt;
    - die so geschlossene Dose bei einer Temperatur zwischen 100 und 130°C sterilisiert,
    **dadurch gekennzeichnet,** daß man eine wirksame Menge einer Zusammensetzung nach einem der Ansprüche 1 und 2 bei der Stufe des Eindosens einsetzt.

4.  Verfahren zur Herstellung von Konserven von Meeresprodukten, wobei man
    - das Fleisch eines Meeresproduktes, das einkonserviert werden soll, gewinnt,
    - das Fleisch einer Blanchierbehandlung oder -stufe unterwirft, die aus dem Inkontaktbringen mit einer Blanchierflüssigkeit bei einer erhöhten Temperatur für eine zur Stabilisierung ausreichende Zeit, anschließendem Abtropfenlassen und Waschen mit Wasser besteht;
    - das Fleisch mit einer Flüssigkeit zum Eindosen während einer Stufe des Eindosens eindost, anschließend die Dose hermetisch schließt;
    - die so geschlossene Dose bei einer Temperatur zwischen 100 und 130°C sterilisiert,
    **dadurch gekennzeichnet,** daß man eine wirksame Menge der Zusammensetzung nach einem der Ansprüche 1 und 2 bei der Stufe des Blanchierens einsetzt.

5.  Verfahren nach Anspruch 3, **dadurch gekennzeichnet,** daß man zur Durchführung der Stufe des Eindosens eine derartige Menge der Zusammensetzung nach einem der Ansprüche 1 und 2 einsetzt, daß die Flüssigkeit zum Eindosen 0,2 bis 2 Gew.-%, bevorzugt 0,7 bis 1,1 Gew.-%, des säurebildenden Mittels, insbesondere Glucono-$\delta$-lacton, und 1 bis 12 %, bevorzugt 4 bis 10 Gew.-%, des Zuckeralkohols, insbesondere Sorbit, enthält.

6.  Verfahren nach Anspruch 4, **dadurch gekennzeichnet,** daß man zur Durchführung der Stufe des Blanchierens eine solche Menge der Zusammensetzung nach einem der Ansprüche 1 und 2 verwendet, daß die Blanchierflüssigkeit 0,2 bis 3 Gew.-%, bevorzugt 0,7 bis 1,5 Gew.-%, des säurebildenden Mittels, insbesondere Glucono-$\delta$-lacton, und 1 bis 15 %, bevorzugt 3 bis 10 Gew.-%, des Zuckeralkohols, insbesondere Sorbit, enthält.

7.  Verfahren nach einem der Ansprüche 3 bis 6, **dadurch gekennzeichnet,** daß man den pH-Wert der Flussigkeit zum Eindosen auf einen Wert zwischen 6 und 7, bevorzugt zwischen 6 und 6,5, entweder mit Hilfe der erfindungsgemäßen Zusammensetzung, falls diese ein säurebildendes Mittel enthält, oder mit Hilfe einer Lebensmittelsäure, falls diese Zusammensetzung ein Derivat des säurebildenden Mittels enthält, einstellt.

## Claims

1. Composition adapted for the preparation of canned seafood, characterized by the fact that it comprises from 1 to 75% by weight of at least one acidogenic agent selected from the group comprising gluconolactones, glucoheptonolactones and their equivalents and/or their mixtures, especially gluconolactones, and/or at least one of the derivatives of the said acidogenic agent as well as from 25 to 99% by weight of at least one sugar-alcohol selected from the hydrogenated derivatives of saccharidic compounds and especially from the group comprising sorbitol, mannitol, xylitol.

2. Composition according to claim 1, characterized by the fact that it comprises from 6.5 to 33% by weight of gluconodeltalactone and from 67 to 93.5% of sorbitol.

3. Process for the preparation of canned seafood in which:
   - the meat of a seafood intended to be canned is extracted,
   - the said meat is subjected to a treatment or bleaching step according to which the said meat is contacted with a bleaching juice at a high temperature, during a duration sufficient to stabilize it, then the said meat is dripped and washed with water,
   - the said meat is canned with a canning juice during a canning step, then the can is hermetically closed,
   - the thus closed can is subjected to a sterilization treatment at a temperature comprised between 100 and 130°C,
   characterized by the fact that an efficient amount of a composition according to one of claims 1 and 2 is used at the moment of the canning step.

4. Process for the preparation of canned seafood in which:
   - the meat of a seafood intended to be canned is extracted, a bleaching juice at a high temperature, during a duration sufficient to stabilize it, then the said meat is dripped and washed with water,
   - the said meat is canned with a canning juice during a canning step, then the can is hermetically closed,
   - the thus closed can is subjected to a sterilization treatment at a temperature comprised between 100 and 130°C,
   characterized by the fact that an efficient amount of a composition according to one of claims 1 and 2 is used at the moment of the bleaching step.

5. Process according to claim 3, characterized by the fact that, in order to carry out the canning step, there is used an amount of the composition according to one of claims 1 and 2 such that the canning juice comprises from 0.2 to 2% by weight, preferably from 0.7 to 1.1% by weight, of acidogenic agent, especially of gluconodeltalactone and from 1 to 12%, preferably from 4 to 10% by weight, of sugar-alcohol, especially of sorbitol.

6. Process according to claim 4, characterized by the fact that, in order to carry out the bleaching step, there is used an amount of the composition according to one of claims 1 and 2 such that the canning juice comprises from 0.2 to 3% by weight, preferably from 0.7 to 1.5% by weight, of acidogenic agent, especially of gluconodeltalactone and from 1 to 15%, preferably from 3 to 10% by weight, of sugar-alcohol, especially of sorbitol.

7. Process according to one of claims 3 to 6, characterized by the fact that the pH of the canning juice is fixed at a value comprised between 6 and 7, preferably between 6 and 6.5, either with the help of the composition according to the invention when the latter contains an acidogenic agent, or with the help of a foodgrade acid when the said composition comprises a derivative of an acidogenic agent.

FIG.1.

FIG.2.